# EUROPEAN PATENT APPLICATION

(11) **EP 4 799 850 A1**
(43) Date of publication of application: **02.09.2026**
(21) Application number: 26161212.1
(22) Date of filing: 27.02.2026
(51) Int. Cl.: B60L 7/26, B60L 15/20

(54) **CONTROL METHOD FOR SEAMLESS BRAKING OF ELECTRIC VEHICLE, CONTROLLER, AND ELECTRIC VEHICLE**

(30) Priority: 28.02.2025 CN 202510242139
(71) Applicant: HUAWEI TECHNOLOGIES CO., LTD., Shenzhen 518129 (CN)
(72) Inventor: Yang, Peng, Shenzhen, 518129 (CN); Lu, Chunhong, Shenzhen, 518129 (CN); Shen, Tianmin, Shenzhen, 518129 (CN); He, Botao, Shenzhen, 518129 (CN)
(74) Representative: Gill Jennings & Every LLP

(57) **Abstract**

This application provides a control method for seamless braking of an electric vehicle, a controller, and an electric vehicle, which are applicable to the field of electric vehicle technologies, to improve comfort of an electric vehicle in a final braking stage. In the foregoing control method, before a vehicle speed of an electric vehicle is equal to a preset vehicle speed, a brake system is controlled to continuously brake four wheels of the electric vehicle, and a torque output by a drive motor is controlled to be 0. Then, before a stroke of a brake pedal decreases to be less than a preset stroke, the brake system is controlled to brake the four wheels, and the drive motor is controlled to output a compensation torque whose direction is the same as directions of rotational speeds of the wheels. Then, before the stroke of the brake pedal decreases to 0, the compensation torque output by the drive motor is controlled to decrease with the decrease in the stroke of the brake pedal. This can avoid a problem that the vehicle lurches forward due to an excessively large compensation torque when braking forces for the wheels decrease, to further improve driving experience.

## Description

### TECHNICAL FIELD

This application relates to the field of electric vehicle technologies, and in particular, to a control method for seamless braking of an electric vehicle, a controller, and an electric vehicle.

### BACKGROUND

In recent years, with popularization of electric vehicles, functions of the electric vehicles are increasingly enriched, to improve user experience. In a final braking stage of an electric vehicle, after stopping, the electric vehicle rebounds under the action of a tire and a suspension. Consequently, the electric vehicle jerks, leading to discomfort. To achieve comfort braking, during braking of an electric vehicle, a common means is to deliberately reduce a braking force in a final braking stage by using a comfort braking algorithm, or control a deceleration of the electric vehicle by using a comfort braking algorithm constructed based on a resolver sensor signal of a wheel. However, in the foregoing solution, the electric vehicle is likely to lurch forward when a stroke of a brake pedal changes, affecting driving experience of a user.

### SUMMARY

Embodiments of this application provide a control method for seamless braking of an electric vehicle, a controller, and an electric vehicle, to control a drive motor to adjust an output compensation torque during comfort braking of an electric vehicle, to prevent the electric vehicle from lurching forward during comfort braking and improve driving experience of a user.

To achieve the foregoing objective, embodiments of this application provide the following technical solutions.

According to a first aspect, an embodiment of this application provides a control method for seamless braking of an electric vehicle. The control method is used to: during braking of the electric vehicle, control a drive motor to output a compensation torque to alleviate jerking of the electric vehicle during braking. The control method includes: after a first moment at which a stroke of a brake pedal increases from 0 and before a second moment at which a brake system performs braking to cause a vehicle speed of the electric vehicle to be equal to a preset vehicle speed, controlling the brake system to continuously brake four wheels of the electric vehicle, and controlling a torque output by the drive motor to be 0; after the second moment and before a third moment at which the stroke of the brake pedal decreases to be equal to a preset stroke, controlling the brake system to continue braking the four wheels, and controlling the drive motor to output a compensation torque whose direction is the same as directions of rotational speeds of the four wheels; and after the third moment and before a fourth moment at which the stroke of the brake pedal decreases to 0, controlling braking forces output by the brake system to the four wheels to decrease with the decrease in the stroke of the brake pedal, and controlling the compensation torque output by the drive motor to start to decrease.

During braking, before the brake system performs braking to a state in which the vehicle speed of the electric vehicle is equal to the preset vehicle speed, the electric vehicle is not in a final braking stage. In this case, the electric vehicle may normally brake the four wheels through the brake system, and the drive motor does not need to output a torque. The vehicle speed of the electric vehicle being equal to the preset vehicle speed and the stroke of the brake pedal being greater than the preset stroke indicate that a deceleration of the electric vehicle is excessively large. While braking the four wheels, the brake system controls the drive motor to output the compensation torque whose direction is the same as the directions of the rotational speeds of the wheels, so that a driving force can be provided for the electric vehicle to reduce the deceleration of the electric vehicle. In this way, the electric vehicle decelerates more smoothly, and comfort during braking in the final braking stage is improved. Then the decrease in the stroke of the brake pedal indicates that a driver is releasing the brake pedal. In this case, if a drive torque output by the drive motor remains unchanged, a difference between the driving force provided by the drive motor and the braking force provided by the brake system increases. Consequently, the deceleration of the electric vehicle quickly decreases, and the electric vehicle lurches forward. In this embodiment of this application, when the stroke of the brake pedal decreases in the final braking stage, the compensation torque output by the drive motor also decreases. This can avoid a problem that the vehicle lurches forward due to an excessively large compensation torque when the braking forces for the wheels decrease, to further improve driving experience.

In an implementation, the control method further includes: after the third moment and before the fourth moment, controlling the compensation torque output by the drive motor to decrease to 0.

In the foregoing implementation solution, before the fourth moment at which the stroke of the brake pedal decreases to 0, the compensation torque output by the drive motor decreases to 0, so that the electric vehicle can be braked in a timely manner through the brake system when the electric vehicle is to stop, to avoid an excessively long braking distance of the electric vehicle.

In an implementation, the control method further includes: before the vehicle speed of the electric vehicle decreases to 0, controlling the compensation torque output by the drive motor to decrease to 0.

In the foregoing implementation solution, before the vehicle speed of the electric vehicle decreases to 0, the compensation torque output by the drive motor decreases to 0, so that the electric vehicle can be braked in a timely manner by using the braking force output by the brake system, to avoid an excessively long braking distance of the electric vehicle.

In an implementation, after the third moment and before the fourth moment, a decrease rate of the stroke of the brake pedal is greater than a preset decrease rate.

The decrease rate of the stroke of the brake pedal being greater than the preset decrease rate indicates that the driver is quickly releasing the brake pedal. In this case, when the braking forces output by the brake system to the four wheels decrease and the compensation torque output by the drive motor remains unchanged, the deceleration of the electric vehicle decreases excessively fast, and consequently, the electric vehicle lurches forward. In the foregoing implementation, the compensation torque output by the drive motor decreases when the braking forces output by the brake system to the four wheels decrease, to prevent the deceleration from decreasing excessively fast, so that the electric vehicle decelerates more smoothly.

In an implementation, the control method further includes: after the third moment and before the fourth moment, controlling the compensation torque output by the drive motor to decrease with the decrease in the stroke of the brake pedal.

In the foregoing implementation solution, the compensation torque output by the drive motor decreases with the decrease in the stroke of the brake pedal, so that a balance is achieved between the braking forces output by the brake system to the four wheels and the driving force provided by the compensation torque output by the drive motor, and the electric vehicle can decelerate more smoothly.

In an implementation, the control method further includes: In a process in which the compensation torque output by the drive motor is controlled to decrease with the decrease in the stroke of the brake pedal, a higher decrease rate of the stroke of the brake pedal indicates a higher decrease rate of the compensation torque output by the drive motor.

A higher decrease rate of the stroke of the brake pedal indicates a higher decrease rate of the braking forces output by the brake system to the four wheels. In this case, an excessively low decrease rate of the compensation torque output by the drive motor still causes an excessively fast decrease in the deceleration of the electric vehicle, and consequently, the vehicle lurches forward. In the foregoing implementation solution, a higher decrease rate of the stroke of the brake pedal indicates a higher decrease rate of the compensation torque output by the drive motor, so that a balance can be achieved between the braking forces output by the brake system to the four wheels and the compensation torque output by the drive motor, to enable the electric vehicle to decelerate more smoothly, and prevent the electric vehicle from lurching forward.

In an implementation, the control method further includes: after the second moment, when a gear position of the electric vehicle switches from a forward position to a reverse position or a parking position, controlling the compensation torque output by the drive motor to decrease.

After the second moment, when the gear position of the electric vehicle switches from the forward position to the reverse position or the parking position, the electric vehicle has not stopped stably. In this case, the compensation torque output by the drive motor causes impact to the electric vehicle, and consequently, the electric vehicle cannot respond to an operation after the gear shift in a timely manner. In the foregoing implementation solution, when the gear position of the electric vehicle switches from the forward position to the reverse position or the parking position, the compensation torque output by the drive motor needs to quickly decrease, to avoid impact on the electric vehicle, and enable the electric vehicle to respond to an operation after the gear shift in a timely manner.

In an implementation, the control method further includes: after the second moment and before the third moment, controlling the compensation torque output by the drive motor to change with a change in the deceleration of the electric vehicle.

When the deceleration of the electric vehicle changes, if the compensation torque output by the drive motor remains unchanged, the electric vehicle cannot decelerate smoothly. Therefore, when the drive motor is controlled to output the compensation torque in the final braking stage, the compensation torque output by the drive motor needs to change with the change in the deceleration of the electric vehicle, to ensure that the electric vehicle can decelerate smoothly.

In an implementation, in a process in which the compensation torque output by the drive motor is controlled to change with the change in the deceleration of the electric vehicle, the compensation torque output by the drive motor needs to be controlled to increase with an increase in the deceleration of the electric vehicle, and the compensation torque output by the drive motor needs to be controlled to decrease with a decrease in the deceleration of the electric vehicle.

In view of this, when the deceleration of the electric vehicle increases, the deceleration of the electric vehicle can be reduced by increasing the compensation torque output by the drive motor, to prevent the driver from leaning forward due to an excessively large deceleration of the electric vehicle. When the deceleration of the electric vehicle decreases, the compensation torque output by the drive motor is reduced, to avoid an excessively fast decrease in the deceleration of the electric vehicle, and prevent the electric vehicle from lurching forward.

In an implementation, the control method further includes: after the second moment and before the third moment, if a difference between a deceleration of the electric vehicle that is indicated by a resolver sensor of the drive motor and a deceleration of the electric vehicle that is indicated by an acceleration sensor is greater than a preset difference, controlling, based on the deceleration of the electric vehicle that is indicated by the acceleration sensor, the compensation torque output by the drive motor.

After the second moment and before the third moment, the electric vehicle is in the final braking stage. In this case, the difference between the deceleration of the electric vehicle that is indicated by the resolver sensor of the drive motor and the deceleration of the electric vehicle that is indicated by the acceleration sensor being greater than the preset difference indicates that the wheels of the electric vehicle slip. In this case, the deceleration of the electric vehicle that is indicated by the acceleration sensor is more accurate. In view of this, the compensation torque output by the drive motor is controlled based on the deceleration of the electric vehicle that is indicated by the acceleration sensor, so that the compensation torque output by the drive motor can be more accurately controlled, to prevent the electric vehicle from lurching forward.

In an implementation, the control method further includes: after the second moment and before the third moment, when braking forces output by the brake system to two front wheels are greater than braking forces output to two rear wheels, controlling a compensation torque output by a front drive motor to be greater than a compensation torque output by a rear drive motor.

The braking forces output by the brake system to the two front wheels being greater than the braking forces output to the two rear wheels indicates that the electric vehicle performs braking when traveling forward. In this case, a center of gravity of the electric vehicle is shifted forward, and it can be ensured that the electric vehicle can decelerate more effectively only when the braking forces output to the two front wheels are greater than the braking forces output to the two rear wheels. In this case, the compensation torque output by the front drive motor is greater than the compensation torque output by the rear drive motor, so that decelerations of the two front wheels can be consistent with decelerations of the two rear wheels, to control the electric vehicle to decelerate more stably.

In an implementation, the control method further includes: after the third moment and before the fourth moment, controlling a front drive motor to reduce an output front drive compensation torque, and controlling a rear drive motor to reduce an output rear drive compensation torque.

In the foregoing implementation solution, the front drive motor is controlled to reduce the output front drive compensation torque, and the rear drive motor is controlled to reduce the output rear drive compensation torque, so that decelerations of the two front wheels can be consistent with decelerations of the two rear wheels, to control the electric vehicle to decelerate more stably.

In an implementation, the control method further includes: when a leftward steering angle of a steering wheel of the electric vehicle is greater than a preset steering angle after the third moment and before the fourth moment, controlling a compensation torque output by a drive motor on the left of the electric vehicle to be less than a compensation torque output by a drive motor on the right of the electric vehicle.

In the foregoing implementation solution, the leftward steering angle of the steering wheel of the electric vehicle being greater than the preset steering angle after the third moment and before the fourth moment indicates that the electric vehicle needs to turn left. In this scenario, a rotational speed of a wheel on the left is less than a rotational speed of a wheel on the right. Therefore, when wheels on two sides of the electric vehicle are driven by different drive motors, the compensation torque output by the drive motor on the left needs to be less than the compensation torque output by the drive motor on the right, to ensure that the vehicle can travel smoothly.

According to a second aspect, an embodiment of this application provides a controller for an electric vehicle. The controller is configured to control the electric vehicle during braking of the electric vehicle, to implement the control method in any one of the implementations of the first aspect.

In an implementation, the controller is further configured to: after a second moment and before a third moment, if a difference between a deceleration of the electric vehicle that is indicated by a resolver sensor of a drive motor and a deceleration of the electric vehicle that is indicated by an acceleration sensor is greater than a preset difference, control, based on the deceleration of the electric vehicle that is indicated by the acceleration sensor, a compensation torque output by the drive motor.

According to a third aspect, an embodiment of this application provides an electric vehicle. The electric vehicle controls, by using the control method in any one of the implementations of the first aspect, a drive motor of the electric vehicle to output a compensation torque during braking of the electric vehicle.

According to the technical principles and the beneficial effects of the first aspect, the controller in the second aspect and the electric vehicle in the third aspect can also prevent an electric vehicle from lurching forward during comfort braking, to improve driving experience of a user.

### BRIEF DESCRIPTION OF DRAWINGS

FIG. 1 is a diagram of an electric vehicle according to an embodiment of this application;
FIG. 2 is another diagram of an electric vehicle according to an embodiment of this application;
FIG. 3 is another diagram of an electric vehicle according to an embodiment of this application;
FIG. 4 is another diagram of an electric vehicle according to an embodiment of this application;
FIG. 5 is another diagram of an electric vehicle according to an embodiment of this application;
FIG. 6 is another diagram of an electric vehicle according to an embodiment of this application;
FIG. 7 is another diagram of an electric vehicle according to an embodiment of this application;
FIG. 8 is a diagram of a braking process of seamless braking of an electric vehicle according to an embodiment of this application;
FIG. 9 is another diagram of a braking process of seamless braking of an electric vehicle according to an embodiment of this application;
FIG. 10 is another diagram of a braking process of seamless braking of an electric vehicle according to an embodiment of this application;
FIG. 11 is another diagram of a braking process of seamless braking of an electric vehicle according to an embodiment of this application;
FIG. 12 is another diagram of a braking process of seamless braking of an electric vehicle according to an embodiment of this application; and
FIG. 13 is another diagram of a braking process of seamless braking of an electric vehicle according to an embodiment of this application.

### DESCRIPTION OF EMBODIMENTS

The following describes the technical solutions in embodiments of this application with reference to the accompanying drawings in embodiments of this application.

It should be noted that "an embodiment" in this application is used to give an example, an illustration, or a description. A solution described as "an embodiment" in this application should not be construed as being more preferred or advantageous than a solution in another embodiment. Specifically, "an embodiment" is used to present an inventive concept of this application in a specific manner.

With development of an electric vehicle, driving experience of the electric vehicle has attracted increasing attention, and braking performance of the electric vehicle is one of key factors that affect the driving experience of the electric vehicle. During braking of the electric vehicle, a final braking stage is a process in which a vehicle speed of the electric vehicle decreases from a quite low speed to 0, in other words, a process in which the electric vehicle switches from a state of being to stop to a state of having completely stopped without movement relative to the ground. During braking of the electric vehicle, a suspension of the vehicle is compressed under the action of a deceleration. After the braking of the vehicle ends, although the vehicle has actually stopped, a body of the vehicle rebounds under the action of the suspension, causing jerking of the vehicle and affecting driving experience of a user.

In the final braking stage of the electric vehicle, to alleviate jerking of the electric vehicle to make a braking process more comfortable, in some related technologies, a braking force of a brake apparatus is reduced in the final braking stage to control the deceleration of the electric vehicle to smoothly decrease to 0. However, in the foregoing solution, a response speed is low. In some other related technologies, in the final braking stage, a compensation torque output by a drive motor is controlled by using a resolver sensor signal of the drive motor, to control the deceleration of the electric vehicle to more smoothly decrease to 0. However, the foregoing solution needs to rely on the resolver sensor signal. When a driver quickly releases a brake, the resolver sensor signal of the drive motor cannot be represented in a timely manner, leading to deterioration of availability of comfort braking.

During comfort braking of the electric vehicle, the driver releases a brake pedal in the final braking stage. Consequently, a stroke of the brake pedal decreases, and a braking force for the electric vehicle decreases. The decrease in the braking force for the electric vehicle causes a decrease in the deceleration of the electric vehicle. Consequently, the electric vehicle lurches forward, causing discomfort. Therefore, how to improve comfort of the braking process when the stroke of the brake pedal changes during comfort braking of the electric vehicle becomes a problem that urgently needs to be resolved.

To resolve the foregoing problem, embodiments of this application provide a control method for seamless braking of an electric vehicle, a controller, and an electric vehicle. The control method for seamless braking of the electric vehicle provided in embodiments of this application is used to control a drive motor to output a compensation torque during braking of the electric vehicle, to alleviate jerking of the electric vehicle during braking. The control method includes: after a first moment at which a stroke of a brake pedal increases from 0 and before a second moment at which a brake system performs braking to cause a vehicle speed of the electric vehicle to be equal to a preset vehicle speed, controlling the brake system to continuously brake four wheels, and controlling a torque output by the drive motor to be 0; after the second moment and before a third moment at which the stroke of the brake pedal decreases to be equal to a preset stroke, controlling the brake system to continue braking the four wheels, and controlling the drive motor to output a compensation torque whose direction is the same as directions of rotational speeds of the four wheels; and after the third moment and before a fourth moment at which the stroke of the brake pedal decreases to 0, controlling braking forces output by the brake system to the four wheels to decrease with the decrease in the stroke of the brake pedal, and controlling the compensation torque output by the drive motor to start to decrease.

According to the control method provided in embodiments of this application, before the vehicle speed of the electric vehicle decreases to be less than the preset vehicle speed and the stroke of the brake pedal decreases to the preset stroke, the drive motor can be controlled to output the compensation torque, to reduce a deceleration of the electric vehicle by increasing a driving force, and perform comfort braking on the electric vehicle. Then, during comfort braking, when the stroke of the brake pedal of the electric vehicle decreases to the preset stroke and the stroke of the brake pedal continues decreasing, the compensation torque output by the drive motor is controlled to decrease, to prevent the electric vehicle from lurching forward due to an excessively large compensation torque, and improve comfort of the electric vehicle during comfort braking in a final braking stage.

The following describes the technical solutions in embodiments of this application with reference to the accompanying drawings.

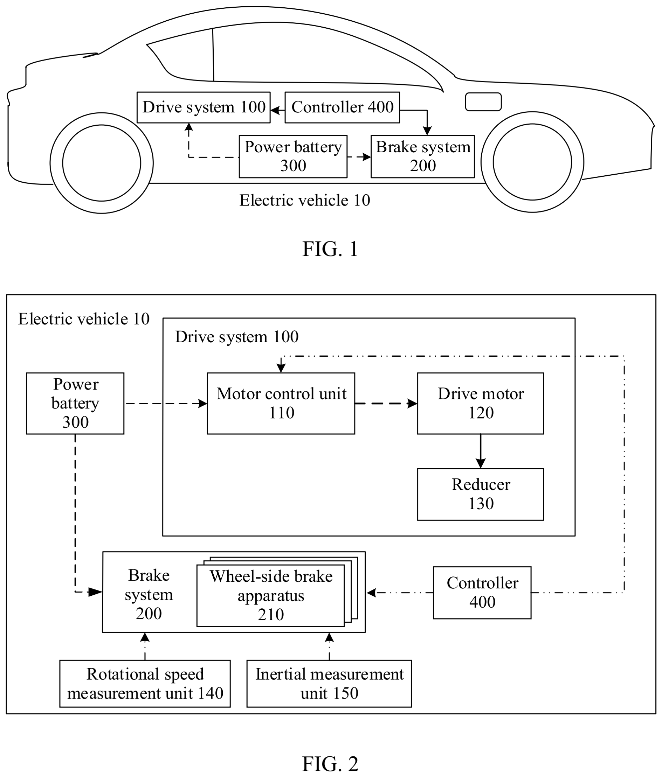

FIG. 1 is a diagram of an electric vehicle according to an embodiment of this application. As shown in FIG. 1, the electric vehicle 10 includes a drive system 100, a brake system 200, a power battery 300, and a controller 400. The drive system 100 is configured to drive wheels of the electric vehicle 10 to rotate, to drive the electric vehicle 10 to travel. The brake system 200 is configured to brake four wheels of the electric vehicle 10 to make the electric vehicle 10 decelerate. The power battery 300 is configured to supply power to the drive system 100 and the brake system 200. The controller 400 is configured to control the brake system 200 to separately brake the four wheels, and control the drive system 100 to output a compensation torque to drive the wheels to rotate.

FIG. 2 is another diagram of an electric vehicle according to an embodiment of this application. As shown in FIG. 2, in an embodiment, the drive system 100 includes a motor control unit (motor control unit, MCU) 110, a drive motor 120, and a reducer 130. The motor control unit 110 is configured to receive a direct current output by the power battery 300, and output an alternating current to control the drive motor 120 to output a torque. The torque output by the drive motor 120 drives, through the reducer 130, wheels of the electric vehicle 10 to rotate. The brake system 200 includes a plurality of wheel-side brake apparatuses 210. The plurality of wheel-side brake apparatuses 210 are configured to respectively brake a plurality of wheels of the electric vehicle 10.

After a user steps on a brake pedal to output a brake signal or an autonomous driving system outputs a brake signal, the controller 400 controls, based on the received brake signal, the wheel-side brake apparatuses 210 to brake the wheels, so that the electric vehicle 10 decelerates during traveling. During braking of the electric vehicle 10, the braking of the electric vehicle 10 includes emergency braking and non-emergency braking. The emergency braking is a process in which the electric vehicle 10 decelerates until stopping within a shortest distance and within a quite short time. During the emergency braking, a deceleration of the electric vehicle 10 is large, so that the electric vehicle 10 quickly brakes within the shortest distance. A non-emergency braking process is a process in which the electric vehicle 10 is controlled to slowly decelerate until stopping within a long time. During the non-emergency braking, a deceleration of the electric vehicle 10 is small, so that the electric vehicle 10 slowly brakes within a longer braking distance.

In an embodiment, the wheel-side brake apparatus 210 is an electronic mechanical brake apparatus (electric-mechanical brake, EMB), an electronic hydraulic brake apparatus (electronic hydraulic brake, EHB), or another type of brake apparatus. This is not limited in this embodiment of this application.

After the user steps on an accelerator pedal of the electric vehicle 10 to output an acceleration indication signal, the controller 400 is further configured to control, based on the acceleration indication signal, the motor control unit 110 in the drive system 100 to adjust the torque output by the drive motor 120. In a final braking stage during the non-emergency braking, the controller 400 can further control the drive motor 120 to output a compensation torque whose direction is the same as directions of rotational speeds of the wheels, to perform comfort braking on the electric vehicle 10.

In an embodiment, still as shown in FIG. 2, the electric vehicle 10 further includes a vehicle speed measurement unit 140. The vehicle speed measurement unit 140 is configured to detect a vehicle speed of the electric vehicle 10. The controller 400 can detect the vehicle speed through the vehicle speed measurement unit 140, and control the drive motor 120 to output the compensation torque during braking, to perform comfort braking on the electric vehicle 10. The vehicle speed measurement unit 140 is a wheel velocity sensor or a resolver sensor.

In an embodiment, still as shown in FIG. 2, the electric vehicle 10 further includes an inertial measurement unit 150. The inertial measurement unit 150 can detect a deceleration of the electric vehicle 10. The controller 400 can detect the deceleration through the inertial measurement unit 150, and adjust the compensation torque output by the drive motor 120 during comfort braking.

In an embodiment, the vehicle speed measurement unit 140 and the inertial measurement unit 150 are communicatively connected to the controller 400 through the brake system 200. Certainly, the vehicle speed measurement unit 140 and the inertial measurement unit 150 may alternatively be directly communicatively connected to the controller 400 through a communication bus or communicatively connected to the controller 400 through the drive system 100.

In an embodiment, the controller 400 is a central control unit, a vehicle control unit (vehicle control unit, VCU), or a domain control unit (domain control unit, DCU) in the electric vehicle 10. In addition, a quantity of drive systems 100 in the electric vehicle 10 is arranged based on a driving mode of the electric vehicle 10.

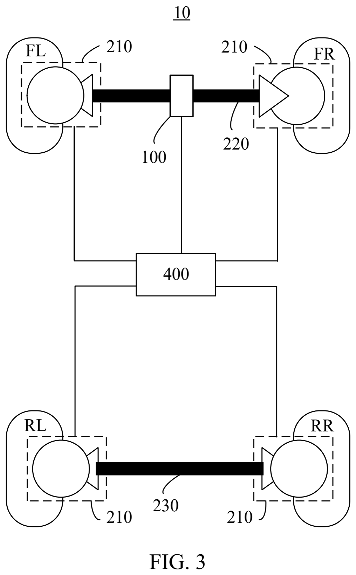

FIG. 3 is another diagram of an electric vehicle according to an embodiment of this application. In an embodiment, two wheels corresponding to a front axle 220 of the electric vehicle 10 are a front left FL wheel and a front right FR wheel, and two wheels corresponding to a rear axle 230 of the electric vehicle 10 are a rear left RL wheel and a rear right RR wheel. As shown in FIG. 3, the electric vehicle 10 includes one drive system 100. The drive system 100 includes a drive motor 120 and a motor control unit 110. When the electric vehicle 10 is a front-wheel drive vehicle, the drive system 100 is configured to drive the front left FL wheel and the front right FR wheel on the front axle 220 of the electric vehicle 10. In addition, the electric vehicle 10 includes four wheel-side brake apparatuses 210. The two wheel-side brake apparatuses 210 are respectively configured to brake the front left FL wheel and the front right FR wheel of the electric vehicle 10. The other two wheel-side brake apparatuses 210 are respectively configured to brake the rear left RL wheel and the rear right RR wheel of the electric vehicle 10.

In an embodiment, when the electric vehicle 10 is a rear-wheel drive vehicle, the drive system 100 may alternatively be configured to drive the rear left RL wheel and the rear right RR wheel of the electric vehicle 10.

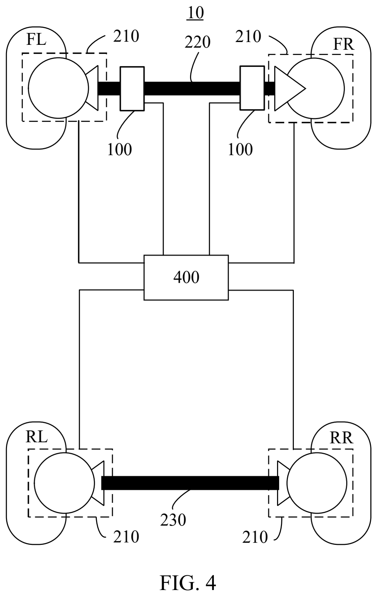

FIG. 4 is another diagram of an electric vehicle according to an embodiment of this application. In an embodiment, the electric vehicle 10 includes two drive systems 100, and each drive system 100 includes a drive motor 120 and a motor control unit 110. As shown in FIG. 4, the two drive systems 100 are respectively configured to drive a front left FL wheel and a front right FR wheel of the electric vehicle 10, so that the front left FL wheel and the front right FR wheel can be independently controlled.

In an embodiment, the two drive systems 100 may alternatively be respectively configured to drive a rear left RL wheel and a rear right RR wheel of the electric vehicle 10, so that the rear left RL wheel and the rear right RR wheel can be independently controlled.

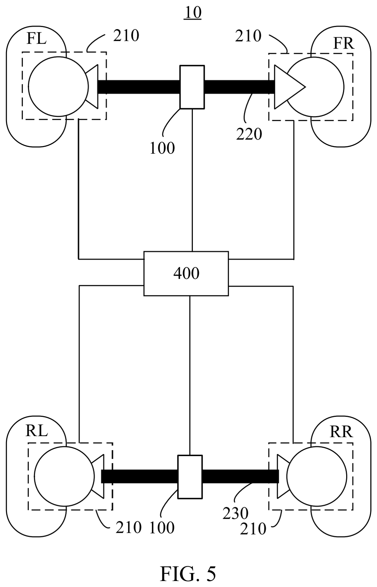

FIG. 5 is another diagram of an electric vehicle according to an embodiment of this application. In an embodiment, as shown in FIG. 5, the electric vehicle 10 includes two drive systems 100, and each drive system 100 includes a drive motor 120 and a motor control unit 110. One drive system 100 drives a front left FL wheel and a front right FR wheel of the electric vehicle 10, and the other drive system 100 drives a rear left RL wheel and a rear right RR wheel of the electric vehicle 10.

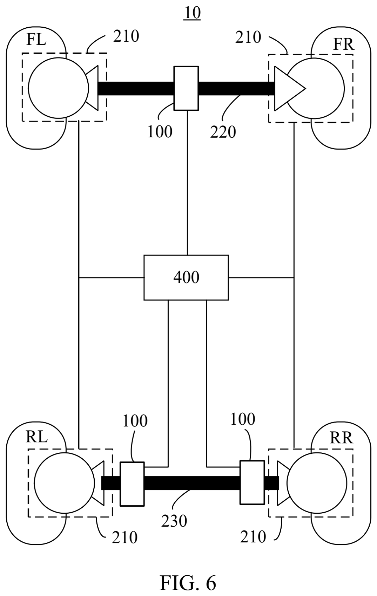

FIG. 6 is another diagram of an electric vehicle according to an embodiment of this application. In an embodiment, as shown in FIG. 6, the electric vehicle 10 includes three drive systems 100. One drive system 100 is configured to drive a front left FL wheel and a front right FR wheel of the electric vehicle 10. The other two drive systems 100 are respectively configured to drive a rear left RL wheel and a rear right RR wheel of the electric vehicle 10.

In an embodiment, the electric vehicle 10 may alternatively drive the rear left RL wheel and the rear right RR wheel through one drive system 100, and drive the front left FL wheel and the front right FR wheel of the electric vehicle 10 respectively through the other two drive systems 100.

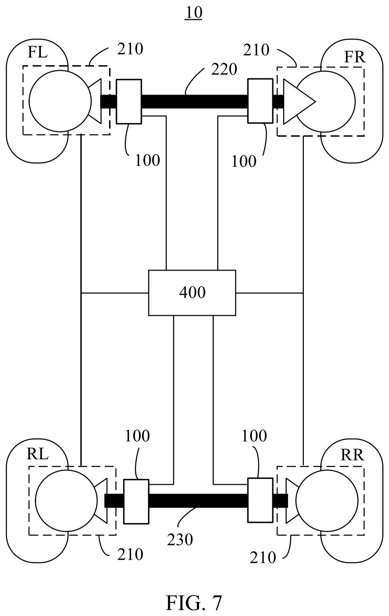

FIG. 7 is another diagram of an electric vehicle according to an embodiment of this application. In an embodiment, as shown in FIG. 7, the electric vehicle 10 includes four drive systems 100. A first drive system 100 is configured to drive a rear left RL wheel of the electric vehicle 10. A second drive system 100 is configured to drive a rear right RR wheel of the electric vehicle 10. A third drive system 100 is configured to drive a front left FL wheel of the electric vehicle 10. A fourth drive system 100 is configured to drive a front right FR wheel of the electric vehicle 10.

After a driver steps on a brake pedal to output a brake signal or an autonomous driving system actively outputs a brake signal, the controller 400 can control four wheel-side brake apparatuses 210 to output braking forces to corresponding wheels, to control the electric vehicle 10 to decelerate. During braking of the electric vehicle 10, a larger stroke of the brake pedal indicates larger braking forces output by the four wheel-side brake apparatuses 210 and faster deceleration of the electric vehicle 10.

In some embodiments, the electric vehicle 10 further has an energy recovery function. Energy recovery means: When the electric vehicle 10 is in a braking state, the wheels drive the drive motor 120 to rotate, the drive motor 120 runs in a power generation state and outputs a torque whose direction is opposite to directions of rotational speeds of the wheels. The drive motor 120 converts kinetic energy of the electric vehicle 10 into electric energy, and the drive motor 120 may provide a braking force for the electric vehicle 10 while generating power.

A braking mode of the electric vehicle 10 includes emergency braking and non-emergency braking. The emergency braking may be understood as a braking process in which the electric vehicle 10 quickly decelerates. During the emergency braking, a deceleration of the electric vehicle 10 is large. The non-emergency braking may be understood as a braking process in which the electric vehicle 10 slowly decelerates. During the non-emergency braking, a deceleration of the electric vehicle 10 is small. Whether braking of the electric vehicle 10 is the emergency braking or the non-emergency braking may be determined based on the deceleration of the electric vehicle 10, the stroke of the brake pedal, or the like.

In an embodiment, if the deceleration of the electric vehicle 10 during braking of the electric vehicle 10 is greater than a preset deceleration, the braking mode of the electric vehicle 10 is the emergency braking; or if the deceleration of the electric vehicle 10 during braking of the electric vehicle 10 is less than or equal to a preset deceleration, the braking mode of the electric vehicle 10 is the non-emergency braking. For example, the preset deceleration is 5 m/s².

In an embodiment, if the stroke of the brake pedal of the electric vehicle 10 during braking of the electric vehicle 10 is greater than a stroke threshold, the braking mode of the electric vehicle 10 is the emergency braking; or if the stroke of the pedal of the electric vehicle 10 during braking of the electric vehicle 10 is less than or equal to a stroke threshold, the braking mode of the electric vehicle 10 is the non-emergency braking For example, the stroke threshold may be 40% of a maximum stroke of the brake pedal.

If the braking mode of the electric vehicle 10 is the emergency braking, braking efficiency and braking safety of the electric vehicle 10 need to be prioritized. To be specific, when the braking mode of the electric vehicle 10 is the emergency braking, the electric vehicle 10 needs to quickly stop based on a braking force indicated by the controller 400. If the braking mode of the electric vehicle 10 is the non-emergency braking, braking comfort and driving experience of the electric vehicle 10 need to be considered. To be specific, jerking of the electric vehicle 10 in a final braking stage needs to be minimized. The controller 400 provided in embodiments of this application controls the drive motor 120 to output the compensation torque in the final braking stage of the electric vehicle 10, to reduce a total braking force for the electric vehicle 10, reduce a deceleration of the electric vehicle, and improve braking comfort. The control method for seamless braking of the electric vehicle provided in this application is applicable to a non-emergency braking scenario.

During braking of the electric vehicle, the final braking stage is a process in which a vehicle speed of the electric vehicle 10 decreases from a quite low speed to completely 0. In an early braking stage and a middle braking stage, a suspension and a tire of the electric vehicle 10 are compressed under the action of a braking deceleration. In the final braking stage, the suspension and the tire rebound, causing jerking of the electric vehicle. In an embodiment, during braking of the electric vehicle 10, the vehicle speed of the electric vehicle 10 is less than or equal to a preset vehicle speed, and the electric vehicle 10 is in the final braking stage. In an embodiment, during braking of the electric vehicle 10, a rotational speed of the drive motor 120 is less than a preset rotational speed, and the electric vehicle 10 is in the final braking stage.

During braking of the electric vehicle 10, the vehicle speed of the electric vehicle 10 decreasing to be less than or equal to the preset vehicle speed indicates that the electric vehicle 10 is in a final braking stage of non-emergency braking. In this case, a decrease in the stroke of the brake pedal of the electric vehicle 10 causes a decrease in braking forces provided by the wheel-side brake apparatuses 210 for the wheels. If the compensation torque output by the drive motor 120 remains unchanged, the deceleration of the electric vehicle 10 decreases excessively fast, and consequently, the electric vehicle 10 lurches forward. Therefore, when the stroke of the brake pedal decreases in the final braking stage, the compensation torque output by the drive motor 120 needs to be reduced, to prevent the electric vehicle 10 from lurching forward, and improve driving experience of a user.

In a process in which the drive motor 120 is controlled to reduce the output compensation torque, resistance to the electric vehicle 10 changes due to external factors such as a road surface slope, a road surface adhesion coefficient, and a rate at which the driver releases the brake pedal.

In an embodiment, in a process of controlling the compensation torque output by the drive motor 120 to decrease to 0, the controller 400 can further adjust, based on a decrease rate of the stroke of the brake pedal, the road surface adhesion coefficient, and the road surface slope, the compensation torque output by the drive motor 120, so that the electric vehicle 10 decelerates more smoothly until stopping.

In a process of controlling the compensation torque output by the drive motor 120 to decrease to 0, when a gear position of the electric vehicle 10 remains unchanged, the controller 400 controls the drive motor 120 to reduce the output compensation torque based on a preset torque decrease rate, so that the electric vehicle 10 decelerates smoothly until stopping. However, when the gear position of the electric vehicle 10 changes, if the compensation torque output by the drive motor 120 remains unchanged, the electric vehicle 10 still lurches forward.

In an embodiment, when the gear position of the electric vehicle 10 changes, the controller 400 can further control the drive motor 120 to reduce the output compensation torque at a rate greater than the preset torque decrease rate, to more quickly reduce the compensation torque output by the drive motor 120, and prevent the electric vehicle 10 from lurching forward.

For ease of understanding the control method for seamless braking of the electric vehicle, the controller, and the electric vehicle that are provided in embodiments of this application, the control method for seamless braking of the electric vehicle, the controller, and the electric vehicle that are provided in embodiments of this application are described below with reference to a first moment t1, a second moment t2, a third moment t3, and a fourth moment t4 during comfort braking of an electric vehicle 10. The first moment t1 indicates that a stroke of a brake pedal increases from 0. The second moment t2 indicates that a vehicle speed of the electric vehicle 10 decreases to be equal to a preset vehicle speed. A third moment t3 indicates that the stroke of the brake pedal decreases to be equal to a preset stroke. A fourth moment t4 indicates that the stroke of the brake pedal decreases to 0.

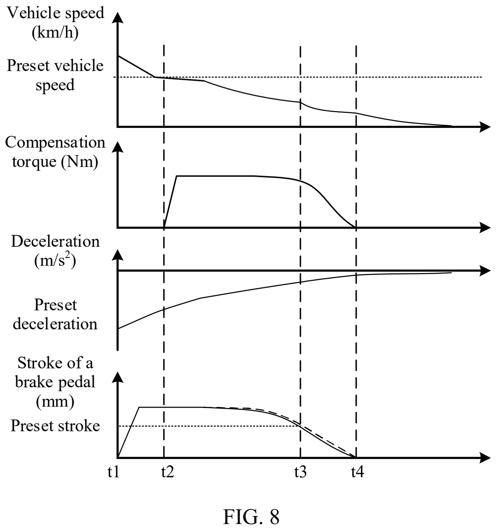

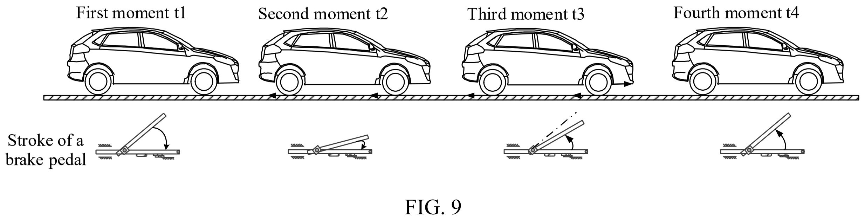

FIG. 8 is a diagram of a braking process of seamless braking of an electric vehicle according to an embodiment of this application. FIG. 9 is a diagram of a scenario of a braking process of seamless braking of an electric vehicle according to an embodiment of this application. As shown in FIG. 8 and FIG. 9, when the electric vehicle 10 performs non-emergency braking, at a first moment tl, a stroke of a brake pedal increases from 0, and a brake system 200 starts to output braking forces to four wheels. After the first moment t1, the stroke of the brake pedal gradually increases, the brake system 200 continuously brakes the four wheels of the electric vehicle 10, a vehicle speed of the electric vehicle 10 continuously decreases, and a torque output by a drive motor 120 is 0.

At a second moment t2 after the first moment t1, the vehicle speed of the electric vehicle 10 decreases to be less than or equal to a preset vehicle speed V1. This indicates that the electric vehicle 10 is in a final braking stage. Then a driver releases the brake pedal in the final braking stage. At a third moment t3 after the second moment t2, the stroke of the brake pedal decreases to be equal to a preset stroke. This indicates that a deceleration of the electric vehicle 10 is small. At a moment between the second moment t2 and the third moment t3, the vehicle speed of the electric vehicle 10 is small. In other words, in this case, the electric vehicle 10 is already in the final braking stage. In this case, a controller 400 controls the brake system 200 to continue braking the four wheels, and controls the drive motor 120 to output a compensation torque whose direction is the same as directions of rotational speeds of the four wheels, to provide a driving force for the electric vehicle 10 by using the compensation torque output by the drive motor 120, to reduce the deceleration of the electric vehicle 10, and control the electric vehicle 10 to decelerate more smoothly. To be specific, in the final braking stage, the deceleration of the electric vehicle 10 is reduced by using the compensation torque, to avoid a "brake dive" phenomenon of the vehicle that occurs when a suspension is compressed and rebounds due to a large deceleration in the final braking stage, alleviate jerking in the final braking stage, and improve driving comfort.

The compensation torque may be comprehensively determined based on a plurality of parameters such as a weight of the electric vehicle, a road surface slope, and a road surface adhesion coefficient. In this embodiment of this application, during braking of the electric vehicle 10, at a moment between the second moment t2 and the third moment t3, the controller 400 can provide driving forces for the wheels by actively controlling the drive motor 120 to output the compensation torque, to reduce the deceleration of the electric vehicle 10 in the final braking stage of the non-emergency braking, and perform comfort braking on the electric vehicle 10.

At a fourth moment t4 after the third moment t3, the stroke of the brake pedal decreases to 0. This indicates that the braking forces output by the brake system 200 are 0. After the third moment t3 and before the fourth moment t4, the controller 400 controls the braking forces output by the brake system 200 to the four wheels to decrease with the decrease in the stroke of the brake pedal, and controls the compensation torque output by the drive motor 120 to start to decrease. The controller 400 may control, based on a preset torque decrease rate, the drive motor 120 to reduce the output compensation torque.

In this embodiment of this application, before the electric vehicle 10 is in the final braking stage, the controller 400 controls the brake system 200 to continuously brake the four wheels of the electric vehicle 10, to reduce the vehicle speed of the electric vehicle 10. When the electric vehicle 10 is in the final braking stage and the stroke of the brake pedal is greater than the preset stroke, the deceleration of the electric vehicle 10 is greater than the preset deceleration. In this case, the controller 400 controls the drive motor 120 to output the compensation torque whose direction is the same as the directions of the rotational speeds of the four wheels, to provide the driving force for the electric vehicle 10, so that the deceleration of the electric vehicle 10 decreases, and the electric vehicle 10 decelerates more smoothly. Finally, in the final braking stage, when the stroke of the brake pedal decreases after the stroke of the brake pedal is less than or equal to the preset stroke, the compensation torque output by the drive motor starts to decrease. This can avoid that the following problem: The deceleration of the electric vehicle 10 further decreases due to an excessively large drive torque output by the drive motor 120 when the stroke of the brake pedal decreases, and consequently, the electric vehicle 10 lurches forward.

In an embodiment, after the third moment t3 and before the fourth moment t4, the controller 400 may calculate a target deceleration of the electric vehicle 10 based on a vehicle speed detected by a vehicle speed measurement unit 140 and an actual deceleration of the electric vehicle 10 that is detected by an inertial measurement unit 150. Then the controller 400 corrects the target deceleration based on a deviation between the target deceleration of the electric vehicle 10 and the actual deceleration of the electric vehicle. Then the controller 400 calculates a torque decrease value based on a deviation between a corrected target deceleration and the actual deceleration. Finally, the controller 400 obtains a compensation torque at a current moment based on a compensation torque at a previous moment and the torque decrease value.

In an embodiment, the vehicle speed of the electric vehicle 10 may be obtained based on a resolver signal of a resolver sensor. The actual deceleration of the electric vehicle may alternatively be obtained through differentiation based on the vehicle speed. In addition, because the electric vehicle 10 is subject to different resistance under different road conditions, a manner of calculating the target deceleration may be obtained through testing. For example, a deceleration curve for comfort braking of the electric vehicle 10 at different vehicle speeds, different weights, and different road surface adhesion coefficients is drawn through a plurality of tests. During braking, the target deceleration of the electric vehicle 10 is obtained based on the deceleration curve for comfort braking, and the compensation torque of the drive motor 120 is reduced based on the target deceleration.

In the foregoing manner, when there is a deviation between the target deceleration and the actual deceleration, the target deceleration of the electric vehicle 10 is corrected, to ensure that the compensation torque output by the drive motor 120 better meets a requirement for comfort braking, and further improve driving experience of a user.

After the third moment t3, with the decrease in the stroke of the brake pedal, the compensation torque output by the drive motor 120 also decreases. However, when the stroke of the brake pedal decreases to 0, if the compensation torque output by the drive motor 120 has not decreased to 0, the electric vehicle 10 continues traveling forward under the action of a driving force provided by the compensation torque, leading to an excessively long braking distance of the electric vehicle 10.

In an embodiment, still as shown in FIG. 8, after the third moment t3 and before the fourth moment t4, the controller 400 controls the compensation torque output by the drive motor to decrease to 0.

In this embodiment of this application, before the stroke of the brake pedal decreases to 0, the controller 400 first actively reduces the compensation torque output by the drive motor 120 to 0, so that the electric vehicle 10 can be braked by fully utilizing a braking force output by a wheel-side brake apparatus 210 in the brake system 200, to shorten a braking distance of the electric vehicle 10.

In an embodiment, alternatively, before the vehicle speed of the electric vehicle 10 decreases to 0, the controller 400 may control the compensation torque output by the drive motor 120 to decrease to 0.

Still as shown in FIG. 8, at the fourth moment t4, the compensation torque output by the drive motor 120 decreases to 0, and the stroke of the brake pedal decreases to 0. However, the vehicle speed of the electric vehicle 10 is not 0. In this case, the controller 400 may actively control the braking force output by the wheel-side brake apparatus 210 in the brake system 200 to gradually decrease from a small value to 0. In view of this, when the vehicle speed of the electric vehicle 10 is small (for example, 3 km/h), the electric vehicle 10 can gradually decelerate until stopping based on the braking force output by the wheel-side brake apparatus 210 and road surface resistance, to improve comfort of a braking process.

In this embodiment of this application, before the vehicle speed of the electric vehicle 10 decreases to 0, the controller 400 first actively reduces the compensation torque output by the drive motor 120 to 0, to avoid an increase in a braking distance of the electric vehicle 10 due to a driving force provided by the compensation torque.

In an embodiment, when the vehicle speed of the electric vehicle 10 is small, the electric vehicle 10 may alternatively gradually decelerate until stopping only based on a deceleration provided by road surface resistance. The road surface resistance is affected only by the weight of the electric vehicle 10 and a road surface friction coefficient. Therefore, the deceleration of the electric vehicle 10 basically remains unchanged.

In this embodiment of this application, when the stroke of the brake pedal decreases to 0 and the vehicle speed is quite low, the electric vehicle 10 can control, based on the road surface resistance, the electric vehicle 10 to decelerate until stopping, so that the deceleration of the electric vehicle 10 can be further reduced, to further improve braking comfort.

It should be understood that the manner of controlling, based on the road surface resistance, the electric vehicle 10 to decelerate until stopping when the vehicle speed of the electric vehicle 10 is quite low is applicable only to a case in which the vehicle speed is quite low and the road surface adhesion coefficient is large. When a braking distance in front of the electric vehicle 10 is limited or the road surface adhesion coefficient is small, and when the stroke of the brake pedal decreases to 0, the vehicle speed of the electric vehicle 10 should decrease to 0, to improve braking safety while improving comfort in the final braking stage.

In an embodiment, after the third moment t3 and before the fourth moment t4, when a decrease rate of the stroke of the brake pedal is greater than a preset decrease rate, the controller 400 controls the braking forces output by the brake system 200 to the four wheels to decrease with the decrease in the stroke of the brake pedal, and controls the compensation torque output by the drive motor 120 to start to decrease.

The decrease rate of the stroke of the brake pedal being greater than the preset decrease rate indicates that the driver is quickly releasing the brake pedal. In this case, the braking forces output by the brake system 200 to the four wheels quickly decrease. Consequently, the deceleration of the electric vehicle 10 quickly decreases, and the electric vehicle 10 lurches forward. In view of this, the compensation torque output by the drive motor 120 needs to quickly decrease, to achieve a balance between the driving force and the braking force for the electric vehicle 10, and control the electric vehicle 10 to decelerate smoothly until stopping.

In an embodiment, still as shown in FIG. 8, after the third moment t3 and before the fourth moment t4, the controller 400 controls the compensation torque output by the drive motor 120 to decrease with the decrease in the stroke of the brake pedal.

The decrease in the stroke of the brake pedal after the third moment t3 and before the fourth moment t4 indicates that a decrease in the braking forces of the brake system 200 for braking the four wheels. In this case, the compensation torque output by the drive motor 120 decreases correspondingly, so that the deceleration provided by the electric vehicle 10 can decrease smoothly, and the electric vehicle 10 can continue performing comfort braking when the stroke of the brake pedal decreases.

In an embodiment, in a process in which the controller 400 controls the compensation torque output by the drive motor 120 to decrease with the decrease in the stroke of the brake pedal, a higher decrease rate of the stroke of the brake pedal indicates a higher decrease rate of the compensation torque output by the drive motor 120 under the control of the controller 400.

During braking of the electric vehicle 10, a higher decrease rate of the stroke of the brake pedal indicates a higher speed at which the driver releases the brake pedal. In this case, if a decrease rate of the compensation torque remains unchanged, the driving force provided by the drive motor 120 is excessively large, and consequently, the electric vehicle 10 decelerates excessively fast, and the electric vehicle 10 lurches forward.

In this embodiment of this application, a higher decrease rate of the stroke of the brake pedal indicates a higher decrease rate of the compensation torque output by the drive motor 120 under the control of the controller 400. In view of this, when the stroke of the brake pedal decreases, a balance can be achieved between the braking force provided by the wheel-side brake apparatus 210 of the electric vehicle 10 and the driving force provided by the drive motor 120, to control the electric vehicle 10 to decelerate more smoothly until stopping.

In an embodiment, after the second moment t2 and before the third moment t3, the controller 400 may control the compensation torque output by the drive motor 120 to change with a change in the deceleration of the electric vehicle. For example, still as shown in FIG. 8, the controller 400 controls the compensation torque output by the drive motor 120 to decrease with the decrease in the deceleration of the electric vehicle 10.

In view of this, the compensation torque output by the drive motor 120 is adjusted based on the deceleration of the electric vehicle 10, so that the deceleration of the electric vehicle 10 can be more accurately controlled, and the electric vehicle 10 decelerates more smoothly until stopping.

It should be understood that, when the deceleration of the electric vehicle 10 increases, the controller 400 may alternatively control the compensation torque output by the drive motor 120 to increase with the increase in the deceleration of the electric vehicle. Details are not described in this embodiment of this application.

In an embodiment, after the second moment t2 and before the third moment t3, the controller 400 may control, based on a deceleration of the electric vehicle 10 that is indicated by the resolver sensor, the compensation torque output by the drive motor 120. Because the resolver sensor can more quickly and accurately detect a rotational speed of a wheel, the controller 400 can quickly and accurately calculate a deceleration of the electric vehicle 10 based on the rotational speed detected by the resolver sensor, to reduce a delay of an entire control process.

In an embodiment, after the second moment t2 and before the third moment t3, if a difference between a deceleration of the electric vehicle 10 that is indicated by the resolver sensor of the drive motor 120 and a deceleration of the electric vehicle 10 that is indicated by an acceleration sensor is greater than a preset difference, the compensation torque output by the drive motor 120 is controlled based on the deceleration of the electric vehicle 10 that is indicated by the acceleration sensor.

In this embodiment of this application, the difference between the deceleration of the electric vehicle 10 that is indicated by the resolver sensor and the deceleration of the electric vehicle 10 that is indicated by the acceleration sensor being greater than the preset difference indicates that a wheel corresponding to the drive motor 120 slips. In this case, the deceleration calculated based on the rotational speed detected by the resolver sensor cannot accurately represent the deceleration of the electric vehicle 10, and consequently, the electric vehicle 10 cannot continue to be controlled to perform comfort braking. In this case, the compensation torque output by the drive motor 120 is controlled based on the deceleration of the electric vehicle 10 that is indicated by the acceleration sensor, so that the electric vehicle 10 can continue performing comfort braking. In this way, an application scenario of comfort braking is extended.

When the road surface slope changes during comfort braking of the electric vehicle 10, resistance to the electric vehicle 10 also changes. When the resistance to the electric vehicle 10 changes, if the drive motor 120 keeps the output compensation torque unchanged, the electric vehicle 10 may decelerate to 0 excessively fast or may not be able to stop in a timely manner. For example, during uphill traveling of the electric vehicle 10, the weight of the electric vehicle 10 provides the electric vehicle 10 with a gravity component whose direction is opposite to a traveling direction, increasing resistance to traveling of the electric vehicle 10. A larger road surface slope indicates higher resistance generated by a load of the electric vehicle 10. Correspondingly, higher resistance generated by the load of the electric vehicle 10 indicates a larger deceleration of the electric vehicle 10, and consequently, the electric vehicle 10 brakes excessively fast and jerks.

In an embodiment, at a moment between the second moment t2 and the third moment t3, when the resistance to the electric vehicle 10 increases and an increase rate of the deceleration of the electric vehicle 10 is greater than a preset increase rate, the controller 400 controls the compensation torque output by the drive motor 120 to increase.

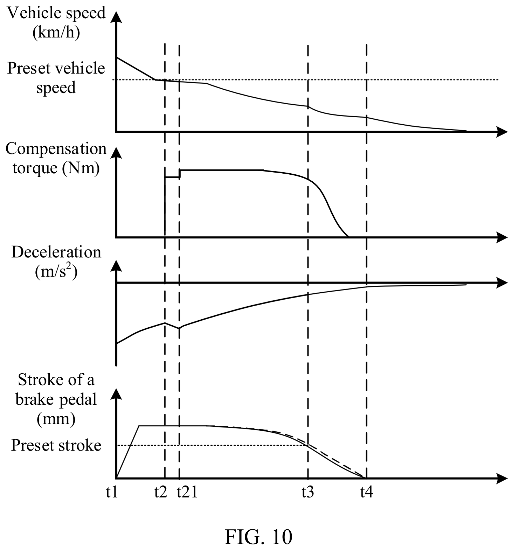

FIG. 10 is another diagram of a control process of seamless braking of an electric vehicle according to an embodiment of this application. As shown in FIG. 10, at a moment t21 between a second moment t2 and a third moment t3, the electric vehicle 10 changes from traveling on a flat road to traveling uphill. Therefore, an increase rate of a deceleration of the electric vehicle 10 is greater than a preset increase rate (for example, the preset increase rate is 0.5 m/S²), and a controller 400 controls a compensation torque output by a drive motor 120 to increase. An increase value of the compensation torque is positively correlated with a weight of the electric vehicle 10 and a road surface slope.

In this embodiment of this application, during comfort braking, when resistance to the electric vehicle 10 increases, the controller can actively increase the compensation torque output by the drive motor 120, to reduce the deceleration of the electric vehicle 10, and avoid jerking of the vehicle caused by excessively fast braking of the electric vehicle 10 due to the increase in the resistance to the electric vehicle 10. In addition, the increase in the compensation torque output by the drive motor 120 can also offset impact of gravity of the electric vehicle 10 during uphill traveling, to prevent the electric vehicle 10 from slipping.

In an embodiment, after the moment t21 and before the third moment t3, after the deceleration of the electric vehicle 10 increases to a maximum value, a stroke of a brake pedal decreases, and the controller 400 controls the compensation torque output by the drive motor 120 to decrease. As shown in FIG. 10, after the moment t22, the controller 400 may control, according to a corresponding technical principle in FIG. 8, the compensation torque output by the drive motor 120. Details are not described in this embodiment of this application.

During downhill traveling of the electric vehicle 10, the weight of the electric vehicle 10 provides the electric vehicle 10 with a gravity component whose direction is the same as a traveling direction. Consequently, an acceleration of the electric vehicle 10 increases, the deceleration of the electric vehicle 10 decreases, and the electric vehicle 10 cannot brake in a timely manner.

In an embodiment, at a moment between the second moment t2 and the third moment t3, when the resistance to the electric vehicle 10 decreases and a decrease rate of the deceleration of the electric vehicle 10 is greater than a preset decrease rate, the controller 400 controls the compensation torque output by the drive motor 120 to decrease at a rate greater than the preset decrease rate.

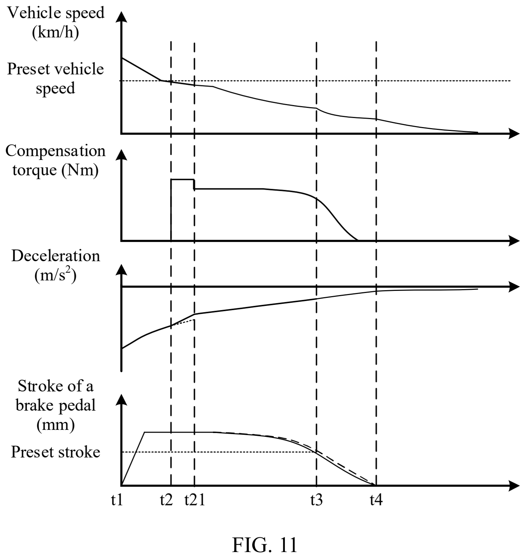

FIG. 11 is another diagram of a control process of seamless braking of an electric vehicle according to an embodiment of this application. As shown in FIG. 11, at a moment t21 between a second moment t2 and a third moment t3, the electric vehicle 10 changes from traveling on a flat road to traveling downhill. Therefore, a decrease rate of a deceleration of the electric vehicle 10 is greater than a preset decrease rate (to be specific, a preset deceleration slope corresponding to a dashed line after the moment t21), and a controller 400 controls a compensation torque output by a drive motor 120 to decrease. A decrease value of the compensation torque is positively correlated with a weight of the electric vehicle 10 and a road surface slope.

In this embodiment of this application, during comfort braking, when resistance to the electric vehicle 10 decreases, the controller 400 can actively decrease the compensation torque output by the drive motor 120, to increase the deceleration of the electric vehicle 10, and avoid a problem that the electric vehicle 10 cannot brake in a timely manner due to the decrease in the resistance to the electric vehicle 10.

In an embodiment, after the moment t21 and before the third moment t3, the decrease rate of the deceleration of the electric vehicle 10 is less than or equal to the preset decrease rate, a stroke of a brake pedal decreases, and the controller 400 controls the compensation torque output by the drive motor 120 to decrease. As shown in FIG. 11, after the moment t22, the controller 400 may control, according to a corresponding technical principle in FIG. 8, the compensation torque output by the drive motor 120. Details are not described in this embodiment of this application.

In an embodiment, during comfort braking, when the electric vehicle 10 travels on a rough road surface or under other road conditions that cause a change in the resistance to the electric vehicle 10, the compensation torque output by the drive motor 120 can also be adjusted in real time based on a resistance change status of the electric vehicle 10 according to the technical principles in FIG. 10 and FIG. 11, to ensure that the electric vehicle 10 can still implement comfort braking on the rough road surface. In addition, after the moment t22, when the resistance to the electric vehicle 10 changes, the compensation torque output by the drive motor 120 can also be adjusted according to the technical principle in FIG. 10 or FIG. 11. Details are not described in this embodiment of this application.

During comfort braking of the electric vehicle 10, when a driver releases the brake pedal, a decrease rate of the stroke of the brake pedal may change. When the decrease rate of the stroke of the brake pedal changes, if the compensation torque output by the drive motor 120 remains unchanged, the deceleration of the electric vehicle 10 may decrease excessively fast, and the electric vehicle 10 may lurch forward.

In an embodiment, at a moment between the second moment t2 and the third moment t3, the stroke of the brake pedal decreases at a first stroke decrease rate, and the compensation torque output by the drive motor 120 is controlled to decrease at a first rate; or the stroke of the brake pedal decreases at a second stroke decrease rate greater than the first stroke decrease rate, and the compensation torque output by the drive motor 120 is controlled to decrease at a second rate greater than the first rate.

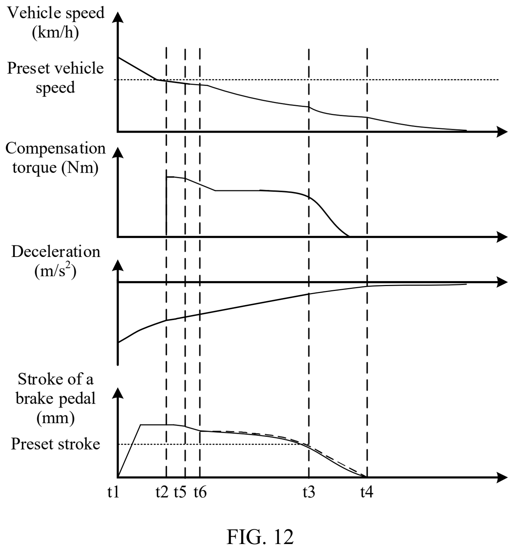

FIG. 12 is another diagram of a control process of seamless braking of an electric vehicle according to an embodiment of this application. As shown in FIG. 12, at a moment t5 between a second moment t2 and a third moment t3, a stroke of a brake pedal decreases at a first stroke decrease rate, and a compensation torque output by a drive motor 120 is controlled to decrease at a first rate. At a moment t6 between the moment t5 and the third moment t3, the stroke of the brake pedal decreases at a second stroke decrease rate, and the compensation torque output by the drive motor 120 is controlled to decrease at a second rate greater than the first rate. After the moment t6, the compensation torque output by the drive motor 120 is controlled to gradually decrease to 0 with a decrease in the stroke of the brake pedal. A larger slope between the stroke of the brake pedal and a time axis in a process in which the stroke of the brake pedal decreases indicates a higher decrease rate of the stroke of the brake pedal.

In this embodiment of this application, at a moment between the second moment t2 and the third moment t3, a controller 400 actively adjusts, based on a decrease rate of the stroke of the brake pedal, a decrease rate of the compensation torque output by the drive motor 120. In this way, a deceleration provided for the electric vehicle 10 by a braking force output by a brake apparatus and the compensation torque output by the drive motor 120 can stably decrease, to prevent the electric vehicle 10 from lurching forward.

During comfort braking of the electric vehicle 10, when a gear position of the electric vehicle 10 changes, the compensation torque output by the drive motor 120 also causes impact to the electric vehicle 10, affecting driving experience.

In an embodiment, after the second moment t2, when the gear position of the electric vehicle 10 switches from a forward position to a reverse position or a parking position, the controller 400 controls the compensation torque output by the drive motor 120 to decrease.

When the gear position of the electric vehicle 10 switches from the forward position to the reverse position or the parking position, if the compensation torque output by the drive motor 120 remains unchanged, the electric vehicle 10 continues traveling forward, and consequently, the electric vehicle 10 cannot respond to an operation after the gear shift in a timely manner.

In this embodiment of this application, after the gear position of the electric vehicle 10 switches from the forward position to the reverse position or the parking position, the controller 400 actively controls the compensation torque output by the drive motor to decrease, so that the vehicle can brake in a timely manner, and the electric vehicle 10 can respond to an operation after the gear shift in a timelier manner.

In the foregoing implementation process, during comfort braking of the electric vehicle 10, when the gear position of the electric vehicle 10 changes, the controller 400 can actively increase the decrease rate of the compensation torque output by the drive motor 120, so that a driving force provided for the electric vehicle 10 by the compensation torque output by the drive motor 120 decreases more quickly. This prevents the compensation torque output by the drive motor 120 from affecting a subsequent operation of the electric vehicle 10 after the gear position of the electric vehicle 10 switches.

During braking of the electric vehicle 10, the controller 400 controls four wheel-side brake apparatuses 210 of a brake system 200 to respectively brake four wheels of the electric vehicle 10. The controller 400 allocates braking forces to the four wheels, to enable the electric vehicle 10 to brake more smoothly during braking. For example, when the electric vehicle 10 brakes while traveling forward, because a center of gravity of the electric vehicle 10 is shifted forward, braking forces for two front wheels are greater than braking forces for two rear wheels, to prevent the two front wheels from slipping.

During braking of the electric vehicle 10, when the braking forces for the two front wheels are greater than the braking forces for the two rear wheels and both the two front wheels and the two rear wheels of the electric vehicle 10 are driven by the drive motor 120, a front drive compensation torque output by a front drive motor corresponding to the two front wheels is the same as a rear drive compensation torque output by a rear drive motor corresponding to the two rear wheels. Consequently, decelerations of the two front wheels are greater than decelerations of the two rear wheels, leading to jerking of a vehicle body.

In an embodiment, to further improve driving experience during comfort braking of the electric vehicle 10, after the second moment t2 and before the third moment t3, when the braking forces of the brake system 200 for the two front wheels are greater than the braking forces for the two rear wheels, the controller 400 actively controls the front drive compensation torque output by the front drive motor corresponding to the two front wheels of the electric vehicle 10 to be greater than the rear drive compensation torque output by the rear drive motor corresponding to the two rear wheels.

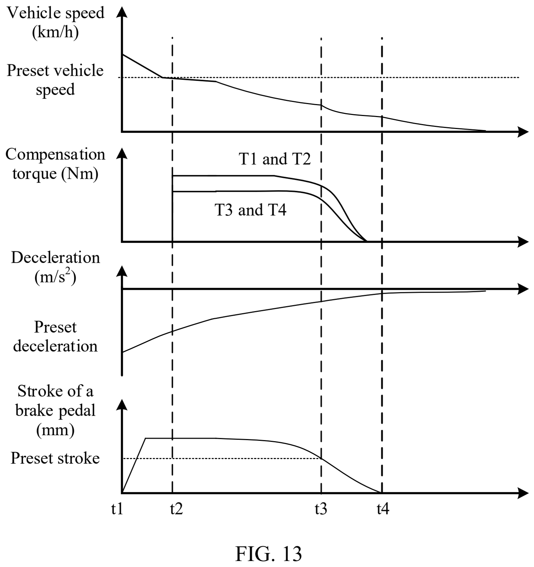

FIG. 13 is another diagram of a control process of seamless braking of an electric vehicle according to an embodiment of this application. As shown in FIG. 13, when the electric vehicle 10 brakes while traveling forward, after a second moment t2 and before a third moment t3, a braking force F1 for a front left FL wheel and a braking force F2 for a front right FR wheel are greater than a braking force F3 for a rear left RL wheel and a braking force F4 for a rear right wheel.

In an embodiment, after the second moment t2 and before the third moment t3, a compensation torque T1 output by a drive motor 120 of the front left FL wheel and a compensation torque T2 output by a drive motor 120 of the front right FR wheel are greater than a compensation torque T3 output by a drive motor 120 of the rear left RL wheel and a compensation torque T4 output by a drive motor 120 of the rear right RR wheel. The front left FL wheel and the front right FR wheel are driven by one drive motor 120, and the rear left RL wheel and the rear right RR wheel are driven by another drive motor 120. Alternatively, the front left FL wheel, the front right FR wheel, the rear left RL wheel, and the rear right RR wheel each are driven by one drive motor 120.

In view of this, when the electric vehicle 10 brakes while traveling forward, a controller 400 can control decelerations of the two front wheels to remain basically consistent with decelerations of the two rear wheels, to perform comfort braking on the electric vehicle 10 more smoothly.

In an embodiment, after the third moment t3 and before a fourth moment t4, when a stroke of a brake pedal of the electric vehicle 10 decreases, the controller 400 controls the front drive compensation torque output by the front drive motor and the rear drive compensation torque output by the rear drive motor to decrease, and the front drive compensation torque output by the front drive motor is always greater than the rear drive compensation torque output by the rear drive motor.

In an embodiment, after the third moment t3 and before the fourth moment t4, the controller 400 controls the compensation torque T1 output by the drive motor 120 corresponding to the front left FL wheel, the compensation torque T2 output by the drive motor 120 corresponding to the front right FR wheel, the compensation torque T3 output by the drive motor 120 corresponding to the rear left RL wheel, and the compensation torque T4 output by the drive motor 120 corresponding to the rear right RR wheel to decrease.

In this embodiment of this application, when the stroke of the brake pedal of the electric vehicle 10 decreases, the controller 400 actively controls the front drive compensation torque output by the front drive motor and the compensation torque output by the rear drive motor to decrease, to increase a deceleration of the electric vehicle 10, ensure that the electric vehicle 10 brakes more quickly during comfort braking, and improve safety during comfort braking.

In a process in which the stroke of the brake pedal of the electric vehicle 10 decreases, when a distance between the electric vehicle 10 and an obstacle is small during comfort braking, if the deceleration of the electric vehicle 10 decreases slowly, a braking distance of the electric vehicle 10 increases, leading to a safety hazard.

In an embodiment, after the third moment t3 and before the fourth moment t4, the controller 400 controls the front drive motor to reduce the output front drive compensation torque, and controls the rear drive motor to reduce the output rear drive compensation torque.

Still as shown in FIG. 13, after the third moment t3 and before the fourth moment t4, the controller 400 controls the compensation torque T1 output by the drive motor 120 corresponding to the front left FL wheel, the compensation torque T2 output by the drive motor 120 corresponding to the front right FR wheel, the compensation torque T3 output by the drive motor 120 corresponding to the rear left RL wheel, and the compensation torque T4 output by the drive motor 120 corresponding to the rear right RR wheel to synchronously decrease to 0.

In this embodiment of this application, the compensation torques for the wheels are first simultaneously controlled to decrease to 0, and then rotational speeds of the wheels are controlled to decrease to 0, to shorten a braking distance of the electric vehicle 10, and improve safety during comfort braking.

During braking of the electric vehicle 10, when a wheel of the electric vehicle 10 slips, if a compensation torque for the wheel that slips is excessively large, slipping of the electric vehicle 10 is aggravated.

In an embodiment, after the third moment t3 and before the fourth moment t4, a rotational speed of the front left wheel of the electric vehicle 10 being greater than a preset rotational speed indicates that the front left wheel slips, and the controller 400 can actively control the compensation torque T1 output by the drive motor 120 corresponding to the front left FL wheel to be less than the compensation torque T2 output by the drive motor 120 corresponding to the front right FR wheel. In view of this, the controller actively reduces a compensation torque for a wheel that slips, to ensure that the electric vehicle 10 can still perform comfort braking comparatively smoothly when the wheel slips.

In an embodiment, during comfort braking of the electric vehicle 10, when a distance between the electric vehicle 10 and an obstacle is large, after the third moment t3 and before the fourth moment t4, the controller 400 may first control the front drive motor to reduce the output front drive compensation torque, and then the controller controls the rear drive motor to reduce the output rear drive compensation torque.

In this embodiment of this application, the controller actively controls the front drive motor to first reduce the output front drive compensation torque, and then controls the rear drive motor to reduce the output rear drive compensation torque, so that the deceleration of the electric vehicle 10 can decrease more smoothly, to further improve comfort during comfort braking.

It should be understood that, after the third moment t3 and before the fourth moment t4, when the compensation torque output by the drive motor 120 decreases with the decrease in the stroke of the brake pedal, the controller 400 may alternatively first control the rear drive motor to reduce the output rear drive compensation torque, and then control the front drive motor to reduce the output front drive compensation torque.

According to a same technical principle, when the electric vehicle 10 brakes while traveling backward, because a center of gravity of the electric vehicle 10 is shifted backward, braking forces for the two rear wheels are greater than braking forces for the two front wheels. In this case, during comfort braking, the controller controls the compensation torque T1 for the front left FL wheel and the compensation torque T2 for the front right FR wheel to be less than the compensation torque T3 for the rear left RL wheel and the compensation torque T4 for the rear right RR wheel. In addition, the controller 400 can further reduce, in the manner in FIG. 13, the compensation torque output by the drive motor 120. Details are not described in this embodiment of this application.

During braking of the electric vehicle 10, when the electric vehicle 10 is in a steering condition, a braking force for a wheel on a steering side is greater than a braking force for the vehicle on the other side. During comfort braking of the electric vehicle 10 in this working condition, a compensation torque output by the drive motor 120 to the wheel on the steering side is greater than a compensation torque on the other side. This may lead to insufficient steering of the electric vehicle 10.

In an embodiment, in a case in which the four wheels of the electric vehicle 10 each are driven by one drive motor 120, when a leftward steering angle of a steering wheel of the electric vehicle 10 is greater than a preset steering angle after the third moment t3 and before the fourth moment t4, the controller 400 can further control a compensation torque output by a drive motor 120 on the right of the electric vehicle 10 to be greater than a compensation torque output by a drive motor 120 on the left. To be specific, the compensation torque T2 for the front right FR wheel is controlled to be greater than the compensation torque T1 for the front left FL wheel, and the compensation torque T3 for the rear right RR wheel is controlled to be greater than the compensation torque T4 for the rear left RL wheel. In view of this, during steering of the electric vehicle 10, the controller 400 can actively adjust compensation torques for the vehicle on both sides, to perform comfort braking on the electric vehicle 10.

It should be understood that, during rightward steering of the electric vehicle 10, a compensation torque output by a drive motor 120 corresponding to a wheel on the left can also be controlled, according to the foregoing technical principle, to be greater than or equal to a compensation torque output by a drive motor 120 corresponding to a wheel on the right.

To sum up, embodiments of this application provide a control method for seamless braking of an electric vehicle, a controller, and an electric vehicle. In the foregoing control method, during comfort braking of an electric vehicle, when a stroke of a brake pedal decreases, a compensation torque output by a drive motor 120 can be actively reduced, to prevent the electric vehicle from lurching forward, and further improve comfort of the electric vehicle during comfort braking.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method for seamless braking of an electric vehicle, wherein the control method is used to: during braking of the electric vehicle, control a drive motor to output a compensation torque to alleviate jerking of the electric vehicle during braking; and the control method comprises:
after a first moment at which a stroke of a brake pedal increases from 0 and before a second moment at which a brake system performs braking to cause a vehicle speed of the electric vehicle to be equal to a preset vehicle speed, controlling the brake system to continuously brake four wheels of the electric vehicle, and controlling a torque output by the drive motor to be 0;
after the second moment and before a third moment at which the stroke of the brake pedal decreases to be equal to a preset stroke, controlling the brake system to continue braking the four wheels, and controlling the drive motor to output a compensation torque whose direction is the same as directions of rotational speeds of the four wheels; and
after the third moment and before a fourth moment at which the stroke of the brake pedal decreases to 0, controlling braking forces output by the brake system to the four wheels to decrease with the decrease in the stroke of the brake pedal, and controlling the compensation torque output by the drive motor to start to decrease.

2. The control method according to claim 1, wherein the control method further comprises:
after the third moment and before the fourth moment, controlling the compensation torque output by the drive motor to decrease to 0.

3. The control method according to claim 1, wherein the control method further comprises:
before the vehicle speed of the electric vehicle decreases to 0, controlling the compensation torque output by the drive motor to decrease to 0.

4. The control method according to claim 1, wherein after the third moment and before the fourth moment, a decrease rate of the stroke of the brake pedal is greater than a preset decrease rate.

5. The control method according to any one of claims 1 to 4, wherein the control method further comprises:
after the third moment and before the fourth moment, controlling the compensation torque output by the drive motor to decrease with the decrease in the stroke of the brake pedal.

6. The control method according to claim 5, wherein the control method further comprises:
in a process in which the compensation torque output by the drive motor is controlled to decrease with the decrease in the stroke of the brake pedal, a higher decrease rate of the stroke of the brake pedal indicates a higher decrease rate of the compensation torque output by the drive motor.

7. The control method according to claim 1, wherein the control method further comprises:
after the second moment, when a gear position of the electric vehicle switches from a forward position to a reverse position or a parking position, controlling the compensation torque output by the drive motor to decrease.

8. The control method according to any one of claims 1 to 7, wherein the control method further comprises:
after the second moment and before the third moment, controlling the compensation torque output by the drive motor to change with a change in a deceleration of the electric vehicle.

9. The control method according to claim 8, wherein controlling the compensation torque output by the drive motor to change with the change in the deceleration of the electric vehicle specifically comprises:
controlling the compensation torque output by the drive motor to increase with an increase in the deceleration of the electric vehicle, and controlling the compensation torque output by the drive motor to decrease with a decrease in the deceleration of the electric vehicle.

10. The control method according to claim 1, wherein the control method further comprises:
after the second moment and before the third moment, if a difference between a deceleration of the electric vehicle that is indicated by a resolver sensor of the drive motor and a deceleration of the electric vehicle that is indicated by an acceleration sensor is greater than a preset difference, controlling, based on the deceleration of the electric vehicle that is indicated by the acceleration sensor, the compensation torque output by the drive motor.

11. The control method according to claim 1, wherein the control method further comprises:
after the second moment and before the third moment, when braking forces output by the brake system to two front wheels are greater than braking forces output to two rear wheels, controlling the compensation torque output by a front drive motor to be greater than the compensation torque output by a rear drive motor.

12. The control method according to claim 1, wherein the control method further comprises:
after the third moment and before the fourth moment, controlling a front drive motor to reduce an output front drive compensation torque, and controlling a rear drive motor to reduce an output rear drive compensation torque.

13. The control method according to claim 1, wherein the control method further comprises:
when a leftward steering angle of a steering wheel of the electric vehicle is greater than a preset steering angle after the third moment and before the fourth moment, controlling the compensation torque output by the drive motor on the left of the electric vehicle to be less than the compensation torque output by the drive motor on the right of the electric vehicle.

14. A controller for an electric vehicle, wherein the controller is configured to control the electric vehicle during braking of the electric vehicle, to implement the control method according to any one of claims 1 to 13.

15. An electric vehicle, wherein the electric vehicle controls, by using the control method according to any one of claims 1 to 13, a drive motor of the electric vehicle to output a compensation torque during braking of the electric vehicle.
